# EUROPÄISCHE PATENTSCHRIFT

(11) **EP 2 946 961 B1**
(45) Veröffentlichungstag und Bekanntmachung des Hinweises auf die Patenterteilung: **02.08.2017**
(21) Anmeldenummer: 15001384.5
(22) Anmeldetag: 07.05.2015
(51) Int. Cl.: B60K 15/035, F02M 37/00, F02M 33/08

(54) **VERFAHREN ZUR ABSAUGUNG VON FLÜSSIGEM KRAFTSTOFF AUS EINER ZUR ABSCHEIDUNG DES FLÜSSIGEN KRAFTSTOFFS DIENENDEN FLÜSSIGKEITSFALLE IN EINEM KRAFTSTOFFTANK EINES KRAFTFAHRZEUGS, SOWIE KRAFTSTOFFANLAGE FÜR EIN KRAFTFAHRZEUG**
METHOD FOR EXTRACTING LIQUID FUEL FROM A LIQUID TRAP IN A FUEL TANK OF A MOTOR VEHICLE FOR DEPOSITION OF THE LIQUID FUEL, AND FUEL SYSTEM FOR A MOTOR VEHICLE
PROCÉDÉ D'ASPIRATION DE CARBURANT LIQUIDE À PARTIR D'UN PIÈGE À LIQUIDES SERVANT À SÉPARER LE CARBURANT LIQUIDE DANS UN RÉSERVOIR DE CARBURANT D'UN VÉHICULE AUTOMOBILE, INSTALLATION DE CARBURANT POUR UN VÉHICULE AUTOMOBILE

(30) Priorität: 23.05.2014 DE 102014007694
(43) Veröffentlichungstag der Anmeldung: 25.11.2015
(73) Patentinhaber: AUDI AG, 85045 Ingolstadt (DE)
(72) Erfinder: Hagen, Harald, 95473 Creussen (DE)

(56) Entgegenhaltungen:
- EP-A2- 1 518 739
- DE-A1- 19 925 728
- DE-A1-102007 016 765
- DE-A1-102008 025 304
- DE-A1-102011 106 006
- US-A- 5 431 144
- US-A1- 2014 123 961

## Beschreibung

Die Erfindung betrifft ein Verfahren zur Absaugung von flüssigem Kraftstoff aus einer Flüssigkeitsfalle in einem Kraftstofftank eines Kraftfahrzeugs, in der bei einer Entlüftung des Kraftstofftanks flüssiger Kraftstoff abgeschieden und in einem Sammelraum gesammelt wird, wobei ein in einem Gas- oder Kopfraum des Kraftstofftanks erzeugter Unterdruck durch eine Saugleitung an der Flüssigkeitsfalle angelegt und der im Sammelraum befindliche flüssige Kraftstoff mindestens teilweise durch die Saugleitung in den Gas- oder Kopfraum abgesaugt wird. Die Erfindung betrifft weiter eine Kraftstoffanlage für ein Kraftfahrzeug, mit einem Kraftstofftank, einer innerhalb des Kraftstofftanks angeordneten Flüssigkeitsfalle zur Abscheidung von flüssigem Kraftstoff bei einer Entlüftung des Kraftstofftanks, wobei die Flüssigkeitsfalle einen Sammelraum für den abgeschiedenen Kraftstoff umfasst, und wobei ein Gas- oder Kopfraum des Kraftstofftanks durch eine mit dem Sammelraum kommunizierende Saugleitung mit der Flüssigkeitsfalle verbunden ist, sodass ein in dem Gas- oder Kopfraum des Kraftstofftanks erzeugter Unterdruck durch die Saugleitung an der Flüssigkeitsfalle anliegt und der im Sammelraum befindliche flüssige Kraftstoff mindestens teilweise durch die Saugleitung in den Gas- oder Kopfraum abgesaugt wird.

Kraftstofftanks von modernen Kraftfahrzeugen sind gewöhnlich als Drucktanks ausgebildet und mit einer Tankentlüftungseinrichtung ausgestattet, die zum einen verhindert, dass sich bei einem größeren Anstieg oder Abfall der Umgebungstemperaturen aufgrund der dadurch hervorgerufenen Verdunstung bzw. Kondensation von Kraftstoff im Gas- oder Kopfraum des Kraftstofftanks ein unerwünschter Überdruck bzw. Unterdruck aufbauen kann und die zum anderen beim Betanken des Kraftfahrzeugs ein Entweichen des vom Kraftstoff verdrängten Gases oder Gasgemischs aus dem Gas- oder Kopfraum des Kraftstofftanks gestattet.

Die Tankentlüftungseinrichtung kann mehrere im Gas- oder Kopfraum verteilte Tankentlüftungsventile, eine durch Leitungen mit den Tankentlüftungsventilen verbundene, innerhalb des Tanks angeordnete Flüssigkeitsfalle, ein mit der Flüssigkeitsfalle verbundenes Tankabsperrventil und einen Aktivkohlefilter umfassen, der außerhalb des Tanks zwischen dem Tankabsperrventil und der Umgebung angeordnet ist. Das Tankabsperrventil ist normalerweise geschlossen und wird während des Betankens des Kraftstofftanks geöffnet, um das vom Kraftstoff verdrängte Gasgemisch aus dem Gas- oder Kopfraum des Kraftstofftanks in den Aktivkohlefilter zuzuführen, der einen unerwünschten Austritt von Kohlenwasserstoffen in die Umgebung verhindert.

Da das bei der Entlüftung von Kraftstofftanks aus dem Gas- oder Kopfraum verdrängte Gas- oder Gasgemisch jedoch nicht nur flüchtige sondern auch flüssige Kohlenwasserstoff-Bestandteile in Form von kleinen Tröpfchen enthält, die den Aktivkohlefilter schädigen können, müssen diese vor dem Austritt des Gasgemischs aus dem Kraftstofftank aus diesem abgeschieden werden. Diese Aufgabe wird von der Flüssigkeitsfalle erfüllt, bei der es sich um einen Flüssigkeitsabscheider oder Syphon handelt. Die Flüssigkeitsfalle befindet sich gewöhnlich innerhalb des Kraftstofftanks und kommuniziert mit den Tankentlüftungsventilen sowie mit dem Tankabsperrventil. Da die Flüssigkeitsfalle zur Gewährleistung einer einwandfreien Betankung des Kraftstofftanks nicht mit flüssigem Kraftstoff gefüllt sein darf, muss der in der Flüssigkeitsfalle abgeschiedene flüssige Kraftstoff abgesaugt werden, was bei vielen Tankentlüftungseinrichtungen mittels einer Saugstrahlpumpe erfolgt, wie beispielsweise in der EP 1 518 739 A2 offenbart.

Jedoch wird bei Saugstrahlpumpen als nachteilig angesehen, dass sie druckempfindlich und bei einem Druckabbau oder einer Druckregelung im Kraftstofftank nur bedingt funktionsfähig sind, ohne eine signifikante Entleerung des Sammelbehälters der Flüssigkeitsfalle permanent Energie verbrauchen und zudem eine aufwändige Konstruktion besitzen müssen, um Leckagen und dadurch ein Eindringen von Kraftstoff in die zumindest zeitweise untergetauchten Flüssigkeitsfallen zu verhindern.

Weiterhin zeigt die Druckschrift DE 10 2008 025 304 A1 ein Kraftstoffsystem, das einen Kraftstofftank und einen Flüssigkeitsabscheider umfasst. Der Kraftstofftank weist einen Innenraum, der flüssigen Kraftstoff und Kraftstoffdampf enthält, und mindestens eine Entlüftung in Flüssigkeitsverbindung mit einer Dampfglocke im Inneren des Kraftstofftanks auf. Der Flüssigkeitsabscheider befindet sich in Flüssigkeitsverbindung mit der mindestens einen Entlüftung im Kraftstofftank und weist eine Kraftstofföffnung auf, die in einer geringeren Höhe als die mindestens eine Entlüftung angeordnet ist, sodass der Flüssigkeitsabscheider bei negativen Druckbedingungen innerhalb des Kraftstofftanks passiv absaugbar ist. Der Flüssigkeitsabscheider kann innerhalb oder außerhalb des Kraftstofftanks angeordnet werden.

Aus der Druckschrift EP 1 518 739 A2 ist ein Kraftstofftank bekannt, der ein Entlüftungssystem enthält, welches eine den Tankinnenraum mit der Außenumgebung verbindende Entlüftungsleitung aufweist, wobei diese einen Siphon bildet, und an der tiefsten Stelle der Entlüftungsleitung ein Verbindungsstück vorgesehen ist, das an der tiefsten Stelle des Siphons eine mit einer Unterdruckquelle verbundene Absaugöffnung aufweist. Schließlich beschreibt die Druckschrift DE 199 25 728 A1 eine Kraftstoffversorgungsanlage. Zum Ausgleich einer thermischen Ausdehnung des in einem Kraftstoffbehälter der Kraftstoffversorgungsanlage für Automobile befindlichen Kraftstoffs ist innerhalb des Kraftstoffbehälters ein Ausgleichsraum vorgesehen, welcher durch mindestens eine Wand gegenüber dem Kraftstoffraum getrennt ist. Die Wand ist im oberen Bereich des Kraftstoffbehälters angeordnet, wobei der Ausgleichsraum und der Kraftstoffraum über Betankungsventile und ein Druckausgleichsventil verbunden sind. Der Ausgleichsraum ist unter Zwischenschaltung eines Sicherheitsventils mit der Atmosphäre verbunden. Durch die Anordnung des Ausgleichsraums im Kraftstoffbehälter wird die Permeation von Kraftstoffgasen vermindert. Ferner kann das benötigte Volumen des Ausgleichsbehälters zugunsten des Nutzvolumens des Kraftstoffbehälters reduziert werden.

Ausgehend hiervon liegt der Erfindung die Aufgabe zugrunde, ein Verfahren und eine Kraftstoffanlage der eingangs genannten Art dahingehend zu verbessern, dass eine Entleerung der Flüssigkeitsfalle auch ohne Saugstrahlpumpe mit einfachen Mitteln möglich ist.

Diese Aufgabe wird bei dem erfindungsgemäßen Verfahren durch die Kombination der Merkmale des Anspruchs 1 gelöst. Grundsätzlich ist vorgesehen, dass ein in einem Gas- oder Kopfraum des Kraftstofftanks erzeugter Unterdruck durch eine Saugleitung an der Flüssigkeitsfalle angelegt und der im Sammelraum befindliche flüssige Kraftstoff mindestens teilweise durch die Saugleitung in den Gas- oder Kopfraum abgesaugt wird.

Der Begriff "Unterdruck" bezeichnet im Rahmen der vorliegenden Patentanmeldung eine negative Druckdifferenz zwischen dem Gas- oder Kopfraum des Kraftstofftanks und dem Inneren der Flüssigkeitsfalle.

Der Erfindung liegt der Gedanke zugrunde, an Stelle einer Saugrohrpumpe das bei Unterdruck im Gas- oder Kopfraum des Kraftstofftanks vorhandene positive Druckgefälle zwischen dem Inneren der Flüssigkeitsfalle und dem Gas- oder Kopfraum zur Absaugung des flüssigen Kraftstoffs aus dem Sammelbehälter der Flüssigkeitsfalle zu nutzen.

Wenn es sich bei dem Kraftstofftank um einen gasdicht geschlossenen Drucktank handelt, kann der Unterdruck im Gas- oder Kopfraum vorteilhaft entweder durch eine natürliche Abkühlung des Kraftstofftanks bei sinkenden Umgebungstemperaturen und/oder durch den Verbrauch von flüssigem Kraftstoff in einem Verbrennungsmotor des Kraftfahrzeugs erzeugt werden. Im zuerst genannten Fall nimmt der Druck im Gas- oder Kopfraum infolge einer Kondensation von Kraftstoffdämpfen ab, während er im zuletzt genannten Fall durch das Absinken des Kraftstoffspiegels und die dadurch verursachte Volumenzunahme des Gas- oder Kopfraums abnimmt. Wenn die Saugleitung derart von unten her in die Flüssigkeitsfalle bzw. in den Sammelraum eintritt, dass von dort flüssiger Kraftstoff in die Saugleitung eindringen kann, wird beim Absinken des Drucks im Gas- oder Kopfraum der flüssige Kraftstoff aus der Flüssigkeitsfalle bzw. aus dem Sammelraum in Richtung des Gas- oder Kopfraums gesaugt, bis sich ein Druckausgleich einstellt.

Wenn die auf diese Weise aus der Flüssigkeitsfalle gesaugte Kraftstoffmenge zur Entleerung der Flüssigkeitsfalle nicht ausreicht, kann die Absaugung des flüssigen Kraftstoffs aus der Flüssigkeitsfalle gemäß einer bevorzugten Ausgestaltung der Erfindung dadurch unterstützt werden, dass bei Vorhandensein einer negativen Druckdifferenz zwischen dem Druck im Gas- oder Kopfraum und der Flüssigkeitsfalle einerseits sowie dem Atmosphären- oder Umgebungsdruck andererseits das Tankabsperr- oder Tankisolierventil zwischen der Flüssigkeitsfalle und dem Aktivkohlefilter geöffnet wird. Beim Öffnen des Tankabsperr- oder Tankisolierventils strömt infolge des niedrigeren Drucks im Gas- oder Kopfraum Luft aus der Umgebung durch den Aktivkohlefilter und das Isolierventil in die Flüssigkeitsfalle und verdrängt dort flüssigen Kraftstoff in Richtung des Gas- oder Kopfraums. Auch durch diese Maßnahme wird ein "Unterdruck" im Gas- oder Kopfraum erzeugt, nämlich eine negative Druckdifferenz zwischen dem Gas- oder Kopfraum des Kraftstofftanks und dem Inneren der Flüssigkeitsfalle, wie zuvor definiert.

Vorzugsweise wird das Tankabsperr- oder Tankisolierventil geöffnet, wenn der Druck im Gas- oder Kopfraum unter den hydrostatischen Druck einer Kraftstoffsäule absinkt, deren Höhe der Höhendifferenz zwischen dem höchsten und tiefsten Punkt der Saugleitung entspricht.

Eine weitere Möglichkeit zur Erzeugung des Unterdrucks im Gas- oder Kopfraum, d.h. eines negativen Druckgefälles zwischen dem Gas- oder Kopfraum und dem Inneren der Flüssigkeitsfalle, besteht grundsätzlich darin, dass ein im Gas- oder Kopfraum enthaltenes Gas oder Gasgemisch aus dem Gas- oder Kopfraum abgesaugt wird. Zu diesem Zweck kann der Gas- oder Kopfraum durch eine Absaugleitung mit einem steuerbaren Absperrventil direkt mit dem Ansaugtrakt des Verbrennungsmotors des Kraftfahrzeugs verbunden und das Absperrventil bei geschlossenem Tankabsperr- oder Tankisolierventil geöffnet werden, um im Gas- oder Kopfraum einen Unterdruck zu erzeugen. Vorteilhaft kann die Saugleitung zwischen dem Gas- und Kopfraum und der Flüssigkeitsfalle nicht nur zum Absaugen von flüssigem Kraftstoff aus der Flüssigkeitsfalle verwendet werden, sondern zugleich auch als Entlüftungsleitung zur Entlüftung des Kraftstofftanks beim Betanken oder bei einer Druckerhöhung infolge eines Anstiegs der Umgebungstemperatur dienen.

Bei der erfindungsgemäßen Kraftstoffanlage wird die Aufgabe durch die Kombination der Merkmale des Anspruchs 7 gelöst. Das im Gas- oder Kopfraum befindliche Ende der Leitung ist zweckmäßig mit einem Tankentlüftungs- und Füllstandsbegrenzungsventil versehen, so dass die Leitung nicht nur als Saugleitung sondern auch als Entlüftungsleitung genutzt werden kann.

Dort, wo bei Verwendung einer einzigen Leitung infolge von größeren Leitungsquerschnitten keine ausreichenden Kraftstoffmengen aus der Flüssigkeitsfalle abgesaugt werden, ist bei einer vorteilhaften Ausgestaltung der erfindungsgemäßen Kraftstoffanlage vorgesehen, dass sich die Leitung vor dem Eintritt in den Sammelraum in mehrere parallele Zweigleitungen mit kleineren Leitungsquerschnitten verzweigt, die dann an der Unterseite des Sammelraums bzw. von unten her in die Flüssigkeitsfalle eintreten.

In diesem Fall sieht eine bevorzugte Ausgestaltung der Erfindung vor, dass die Leitung oder die Zweigleitungen derart von unten her in den Sammelraum eintreten, dass sich ein Endabschnitt der Leitung oder Zweigleitungen innerhalb der Flüssigkeitsfalle nach oben durch den Sammelraum erstreckt, oberhalb des Sammelraums bzw. oberhalb des Kraftstoffspiegels im Sammelraum in die Flüssigkeitsfalle mündet und innerhalb des Sammelraums eine seitliche Öffnung aufweist, durch die flüssiger Kraftstoff in die Leitung oder die Zweigleitungen eintreten kann. Durch diese Maßnahme kann zum einen in der der Flüssigkeitsfalle eine sehr gute Abscheidewirkung erzielt werden, da kein Kraftstoff aus der Flüssigkeitsfalle mitgerissen werden kann. Zum anderen muss beim Betanken nur gegen das auszublasende Volumen der Flüssigkeitsfalle angetankt werden.

Zusätzlich ist es von Vorteil, wenn das Fassungsvermögen der Flüssigkeitsfalle bzw. des Sammelraums an die bei einer Heißdynamikfahrt maximal anfallende Menge an flüssigem Kraftstoff angepasst wird und/oder wenn in einer von der Flüssigkeitsfalle zum Einfüllstutzen bzw. Einfüllrohr des Kraftstofftanks führenden Entlüftungsleitung ein Expansionsvolumen zur Gewährleistung eines niedrigen Druckniveaus in der Flüssigkeitsfalle vorgesehen wird.

Wenn zwischen dem Einfüllstutzen oder Einfüllrohr des Kraftstofftanks und der Flüssigkeitsfalle eine Verbindung besteht, kann dort vorteilhaft ein Ventil vorgesehen werden, das bei der Entleerung der Flüssigkeitsfalle ein Zurücksaugen von Kraftstoff aus dem Einfüllrohr in die Flüssigkeitsfalle verhindert. Das Ventil besitzt bevorzugt drei Anschlüsse, von denen einer erster Anschluss mit der Flüssigkeitsfalle, ein zweiter Anschluss mit dem Einfüllstutzen oder Einfüllrohr des Kraftstofftanks und ein dritter Anschluss mit der Umgebung kommuniziert. Das Ventil ist so ausgebildet, dass einerseits bei einem Unterdruck in der Flüssigkeitsfalle durch das Ventil Luft aus der Umgebung in die Flüssigkeitsfalle strömen kann und dass andererseits beim Betanken durch die Flüssigkeitsfalle hindurch verdrängte Gas oder Gasgemisch durch das Ventil in den Einfüllstutzen oder das Einfüllrohr geleitet wird.

Im Folgenden wird die Erfindung anhand von zwei in der Zeichnung dargestellten Ausführungsbeispielen näher erläutert.
Fig. 1 zeigt eine schematische Querschnittsansicht von Teilen einer erfindungsgemäßen Kraftstoffanlage eines Kraftfahrzeugs mit einer Flüssigkeitsfalle zur Abscheidung von flüssigem Kraftstoff bei einer Entlüftung des Kraftstofftanks;
Fig. 2 zeigt eine vergrößerte horizontale Schnittansicht entlang der Linie II - II der Fig. 1 mit einer Draufsicht auf die Flüssigkeitsfalle und eine zum Gas- oder Kopfraum des Kraftstofftanks führende Saugleitung;
Fig. 3 zeigt eine vergrößerte vertikale Schnittansicht der Flüssigkeitsfalle und eines Teils der Saugleitung;
Fig. 4 zeigt eine vertikale Ansicht der Flüssigkeitsfalle und einer von der Flüssigkeitsfalle zu einem Aktivkohlefilter führenden Be- und Entlüftungsleitung mit einem Tankabsperr- oder Tankisolierventil;
Fig. 5a und 5b zeigen zwei Regelschleifen zur Ansteuerung des Tankabsperr- oder Tankisolierventils;
Fig. 6 zeigt eine schematische Ansicht von Teilen einer erfindungsgemäßen Kraftstoffanlage mit einer Verbindung zwischen dem Gas- oder Kopfraum und einem Einfüllstutzen oder Einfüllrohr des Kraftstofftanks bei geschlossenem Einfüllstutzen;
Fig. 7 zeigt eine Ansicht entsprechend Fig. 6, jedoch während einer Betankung des Kraftstofftanks;
Fig. 8 zeigt eine vergrößerte Ausschnittsdarstellung aus Fig. 6 und 7.

Die in den Figuren nur teilweise dargestellte Kraftstoffanlage ist für ein Kraftfahrzeug mit einem Verbrennungsmotor bestimmt. Die Kraftstoffanlage umfasst einen druckdichten Kraftstofftank 1, der zum Betanken mit einem Einfüllrohr 2 mit einem druckdicht verschließbaren Einfüllstutzen 3 und einer Klappe 4 am unteren Ende versehen ist.

Der Kraftstofftank 1 ist mit einer Tankentlüftungseinrichtung ausgestattet, die beim Betanken des Kraftfahrzeugs sowie bei einem Anstieg der Umgebungstemperatur eine Entlüftung des Kraftstofftanks 1 gestattet.

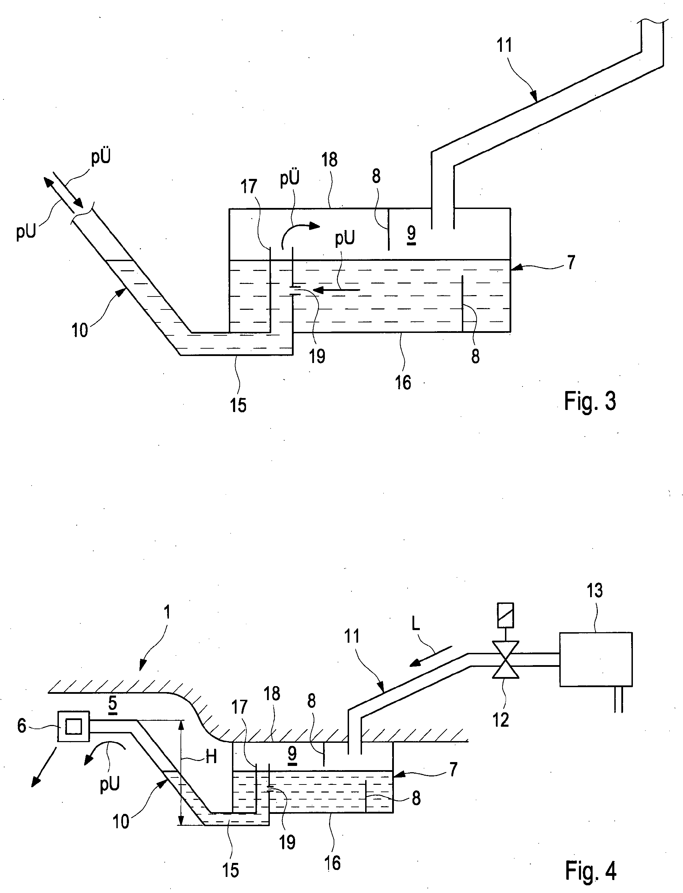

Innerhalb des Tanks 1 umfasst die Tankentlüftungseinrichtung ein in einem Gas- oder Kopfraum 5 angeordnetes Tankentlüftungs- und Füllstandsbegrenzungsventil 6, sowie eine Flüssigkeitsfalle 7 mit einem Labyrinth 8 und einem unteren Kraftstoffsammelraum 9, die durch eine als Saugleitung und als interne Tankentlüftungsleitung dienende Leitung 10 mit dem Ventil 6 verbunden ist. In die Flüssigkeitsfalle 7 mündet von oben her eine externe Be- und Entlüftungsleitung 11, die oberhalb der Flüssigkeitsfalle 7 aus dem Tank 1 herausgeführt ist. Außerhalb des Tanks 1 umfasst die Tankentlüftungseinrichtung ein Tankabsperr- oder Tankisolierventil 12 und einen mit diesem verbundenen Aktivkohlefilter 13 (Fig. 4).

Das Tankabsperr- oder Tankisolierventil 12 ist normalerweise geschlossen und wird zur Entlüftung des Kraftstofftanks 1 geöffnet, um während des Betankens des Kraftstofftanks 1 aus dem Gas- oder Kopfraum 5 verdrängtes Gas oder Gasgemisch in die Umgebung abzuführen. Außerdem wird das Tankabsperr- oder Tankisolierventil 12 zur Tankentlüftung unter der Steuerung eines Motorsteuergeräts des Verbrennungsmotors geöffnet, wenn der Druck im Tank 1 zum Beispiel infolge eines Anstiegs der Umgebungstemperatur einen einstellbaren Überdruck-Schwellenwert übersteigt.

Der Aktivkohlefilter 13 verhindert, dass bei der Entlüftung des Kraftstofftanks 1 flüchtige Kohlenwasserstoffe (HC) in dem aus dem Tank 1 ausströmenden Gas oder Gasgemisch in die Umgebung gelangen und enthält zu diesem Zweck eine Füllung aus Aktivkohle, welche die flüchtigen Kohlenwasserstoffe (HC) absorbiert. Der Aktivkohlefilter 13 wird regeneriert, indem Umgebungsluft durch den Aktivkohlefilter 13 hindurch in einen Ansaugtrakt des Verbrennungsmotors angesaugt wird, um den Filter 13 zu spülen und die flüchtigen Kohlenwasserstoffe in den Brennräumen des Verbrennungsmotors zu verbrennen.

Die Flüssigkeitsfalle 7 bildet einen Flüssigkeitsabscheider, der bei der Entlüftung des Kraftstofftanks 1 verhindert, dass von dem ausströmenden Gas oder Gasgemisch flüssiger Kraftstoff zum Aktivkohlefilter 13 mitgeführt wird. Der abgeschiedene flüssige Kraftstoff sammelt sich im Kraftstoffsammelraum 9 im unteren Teil der Flüssigkeitsfalle 7. Auf eine nähere Beschreibung des zur Abscheidung dienenden Labyrinths 8 wird verzichtet, da der Aufbau derselbe wie bei herkömmlichen Flüssigkeitsfallen 7 ist.

Da zu viel flüssiger Kraftstoff in der Flüssigkeitsfalle 7 eine Betankung des Kraftfahrzeugs verhindert, muss die Flüssigkeitsfalle 7 bzw. deren Kraftstoffsammelraum 9 regelmäßig entleert werden. Dazu wird im Gas- oder Kopfraum 5 des Kraftstofftanks 1 ein Unterdruck erzeugt, d.h. eine negative Druckdifferenz zwischen dem Druck im Gas- oder Kopfraum 5 und dem Druck in der Flüssigkeitsfalle 7. Dieser Unterdruck wird durch die Leitung 10 an der Flüssigkeitsfalle 7 angelegt, wodurch der im Sammelraum 9 befindliche flüssige Kraftstoff mindestens teilweise durch die Leitung 10 und das Tankentlüftungs- und Füllstandsbegrenzungsventil 6 in den Gas- oder Kopfraum 5 abgesaugt wird.

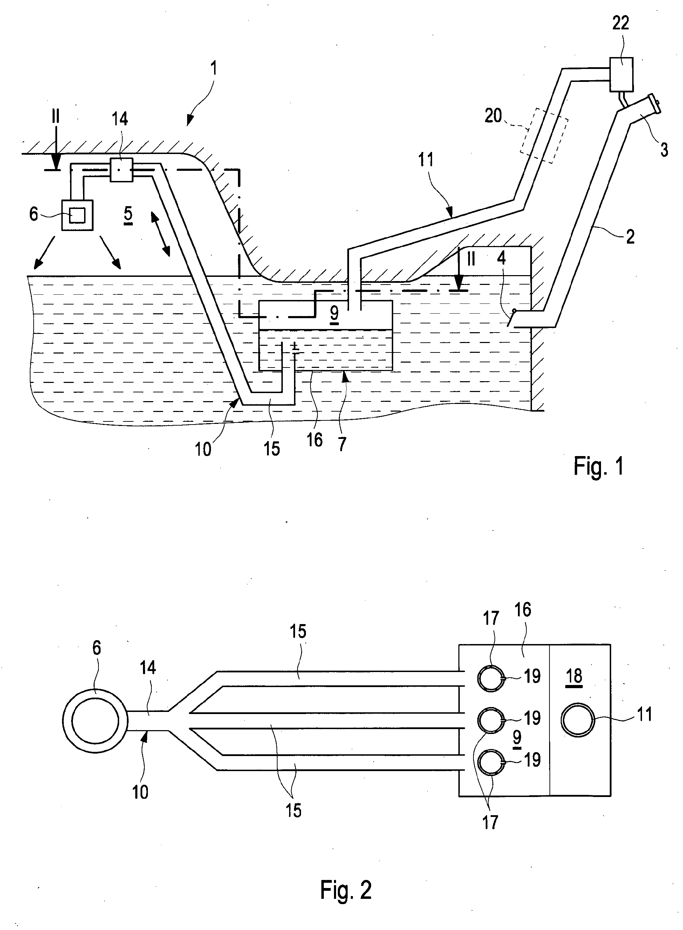

Um eine optimale Absaugung des Kraftstoffs aus dem Sammelraum 9 zu gewährleisten, kann die Leitung 10 zwischen dem Ventil 6 und der Flüssigkeitsfalle 7 im Gas- oder Kopfraum 5 einen Verteiler 14 umfassen, in dem sich die Leitung 10 in mehrere Zweigleitungen 15 verzweigt, wie am besten in Fig. 2 dargestellt. Die Zweigleitungen 15 weisen einen kleineren Leitungsdurchmesser von etwa 8 mm auf.

Wie am besten in Fig. 1 und 3 dargestellt, erstrecken sich die Zweigleitungen 15 vom Verteiler 14 aus nach unten bis unter einen Boden 16 des Sammelraums 9, von wo aus ihre Endabschnitte 17 durch den Boden 16 hindurch nach oben in die Flüssigkeitsfalle 7 eintreten. Die vertikal ausgerichteten Endabschnitte 17 erstrecken sich als Tauchrohre durch den im Sammelraum 9 befindlichen Kraftstoff hindurch nach oben bis in die Nähe einer oberen Begrenzungswand 18 der Flüssigkeitsfalle 7, wo sie oberhalb des Kraftstoffspiegels in der Flüssigkeitsfalle 7 münden. In einem geringen Abstand oberhalb des Bodens 16 weisen die Endabschnitte 17, jeweils eine seitliche Bohrung 19 mit kleinen Öffnungsquerschnitt auf, durch die flüssiger Kraftstoff aus dem Sammelraum 9 in die Zweigleitungen 15 eintreten kann.

Die Abmessungen der Flüssigkeitsfalle 7 bzw. des Sammelraums sind auf die Kraftstoffmengen ausgelegt, die bei einer Heißdynamikfahrt des Kraftfahrzeugs anfallen können. Um einen Druckanstieg in der Flüssigkeitsfalle 7 zu verhindern, kann die Be- und Entlüftungsleitung 11 ein Expansionsvolumen 20 umfassen.

Wenn im Gas- oder Kopfraum 5 ein "Überdruck" herrscht, d.h. wenn eine positive Druckdifferenz zwischen dem Gas- oder Kopfraum 5 und dem Inneren der Flüssigkeitsfalle 7 vorhanden ist, zum Beispiel wenn bei einem Anstieg der Umgebungstemperatur oder beim Betanken der Druck im Gas- oder Kopfraum 5 ansteigt, wird Gas oder Gasgemisch aus dem Gas- oder Kopfraum 5 durch die als Entlüftungsleitung wirkende Leitung 10 in die Flüssigkeitsfalle 7 gedrückt, wie durch die Pfeile pÜ in Fig. 3 angezeigt. Bei geöffnetem Tankabsperr- oder Tankisolierventil 12 kann das Gas oder Gasgemisch von dort durch die Leitung 11 und den Aktivkohlefilter 13 in die Umgebung austreten.

Wenn hingegen im Gas- oder Kopfraum 5 ein "Unterdruck" herrscht, d.h. wenn eine negative Druckdifferenz zwischen dem Gas- oder Kopfraum 5 und dem Inneren der Flüssigkeitsfalle 7 vorhanden ist, wird flüssiger Kraftstoff aus dem Sammelraum 9 durch die als Saugleitung wirkende Leitung 10 aus der Flüssigkeitsfalle 7 in den Gas- oder Kopfraum 5 gesaugt, wie durch die Pfeile pU in Fig. 3 angezeigt. Diese Druckdifferenz wird gezielt zur Absaugung von flüssigem Kraftstoff aus der Flüssigkeitsfalle 7 ausgenutzt, indem der im Gas- oder Kopfraum 5 erzeugte Unterdruck durch die Leitung 10 an der Flüssigkeitsfalle 7 angelegt wird. Dadurch wird der durch die Bohrung 19 in die Leitung 10 bzw. in die Zweigleitungen 15 eingetretene Kraftstoff in Richtung des Gas- oder Kopfraums 5 gesaugt, woraufhin weiterer Kraftstoff durch die Bohrung 19 in die Leitung 10 bzw. die Zweigleitungen 15 nachströmt.

Der Unterdruck wird zum Beispiel erzeugt, wenn sich der Tank 1 infolge eines Absinkens der Umgebungstemperatur abkühlt oder wenn der Kraftstoffspiegel im Tank 1 durch Verbrauch von Kraftstoff im Verbrennungsmotor absinkt. Wenn dieser Unterdruck ausreichend hoch ist, so dass er den hydrostatischen Druck einer Kraftstoffsäule mit einer Höhe H übersteigt, wird die Flüssigkeitsfalle 7 ohne zusätzliche unterstützende Maßnahmen entleert. Wie in Fig. 4 dargestellt, entspricht die Höhe H der Höhendifferenz zwischen dem höchsten und dem tiefsten Punkt der Leitung 10.

Wenn der Unterdruck zur Entleerung der Flüssigkeitsfalle nicht ausreicht, kann als unterstützende Maßnahme das Tankabsperr- oder Tankisolierventil 12 geöffnet werden, wenn auch zwischen dem Inneren der Flüssigkeitsfalle 7 und der Umgebung eine negative Druckdifferenz vorhanden ist. Wie in Fig. 4 dargestellt, wird dadurch die negative Druckdifferenz zwischen dem Gas- oder Kopfraum 5 und dem Inneren der Flüssigkeitsfalle 7 verstärkt. Durch den zusätzlichen Unterdruck sowie durch die in die Flüssigkeitsfalle 7 einströmende Umgebungsluft (Pfeil L in Fig. 4) wird zusätzlicher Kraftstoff aus der Flüssigkeitsfalle 7 in den Gas- oder Kopfraum 5 gefördert.

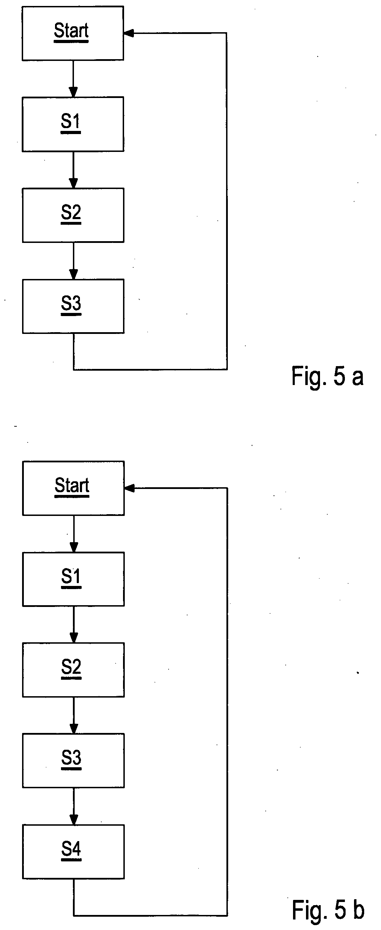

Die Regelung des Öffnens und Schließens des Tankabsperr- oder Tankisolierventils 5 zur Unterstützung der Entleerung der Flüssigkeitsfalle wird nachfolgend unter Bezugnahme auf Fig. 5a und 5b anhand zweier Regelschleifen erläutert, wobei der Unterdruck im Gas- oder Kopfraum 5 in Fig. 5a durch den Kraftstoffverbrauch des Verbrennungsmotors und in Fig. 5b durch natürliche Abkühlung des Kraftstofftanks 1 erzeugt wird.

In Fig. 5a wird in einem ersten Schritt S1 nach dem Start der Regelschleife festgestellt, ob die Druckdifferenz zwischen dem Umgebungsdruck und dem Druck im Gas- oder Kopfraum 5 ausreicht, um den Kraftstoff aus der Flüssigkeitsfalle 7 über die Höhe H in den Gas- oder Kopfraum 5 zu fördern. Wenn dies der Fall ist, wird in einem zweiten Schritt S2 das Tankabsperr- oder Tankisolierventil 12 geöffnet, so dass Luft aus der Umgebung in die Flüssigkeitsfalle 7 strömen und dabei flüssigen Kraftstoff aus dem Sammelraum 9 in Richtung des Kopf- oder Gasraums 5 drücken kann. Sobald die Flüssigkeitsfalle 7 leer ist und der Druck im Gas- oder Kopfraum 5 dem Umgebungsdruck entspricht, wird in einem dritten Schritt S3 das Tankabsperr- oder Tankisolierventil 12 wieder geschlossen. Die Regelschleife kehrt dann zum Start zurück.

In Fig. 5b wird in einem ersten Schritt S1 festgestellt, ob während einer dem Start der vorangehenden Heißdynamikfahrt, die häufig zu einer Befüllung der Flüssigkeitsfalle 7 mit flüssigem Kraftstoff führt, die Temperatur des Kraftstofftanks 1 einen vorgegebenen Temperaturschwellenwert T_{S} überschritten hat und ob eine Tankdruckregelung aktiv ist. Wenn beides der Fall ist, wird in einem zweiten Schritt S2 festgestellt, ob die aktuelle Temperatur T_{Ist} um ein vorgegebenes Maß unterhalb des Temperaturschwellenwerts T_{S} liegt. Wenn dies der Fall ist, wird daraus geschlossen, dass die Druckdifferenz zwischen dem Umgebungsdruck und dem Druck im Gas- oder Kopfraum 5 ausreicht, um den Kraftstoff aus der Flüssigkeitsfalle 7 über die Höhe H in den Gas- oder Kopfraum 5 zu fördern. Dann wird in einem dritten Schritt S3 das Tankabsperr- oder Tankisolierventil 12 geöffnet, so dass Luft aus der Umgebung in die Flüssigkeitsfalle 7 strömen und dabei flüssigen Kraftstoff aus dem Sammelraum 9 in Richtung des Kopf- oder Gasraums 5 drücken kann. Sobald die Flüssigkeitsfalle 7 leer ist und der Druck im Gas- oder Kopfraum 5 dem Umgebungsdruck entspricht, wird in einem vierten Schritt S4 das Tankabsperr- oder Tankisolierventil 12 wieder geschlossen. Die Regelschleife kehrt dann zum Start zurück.

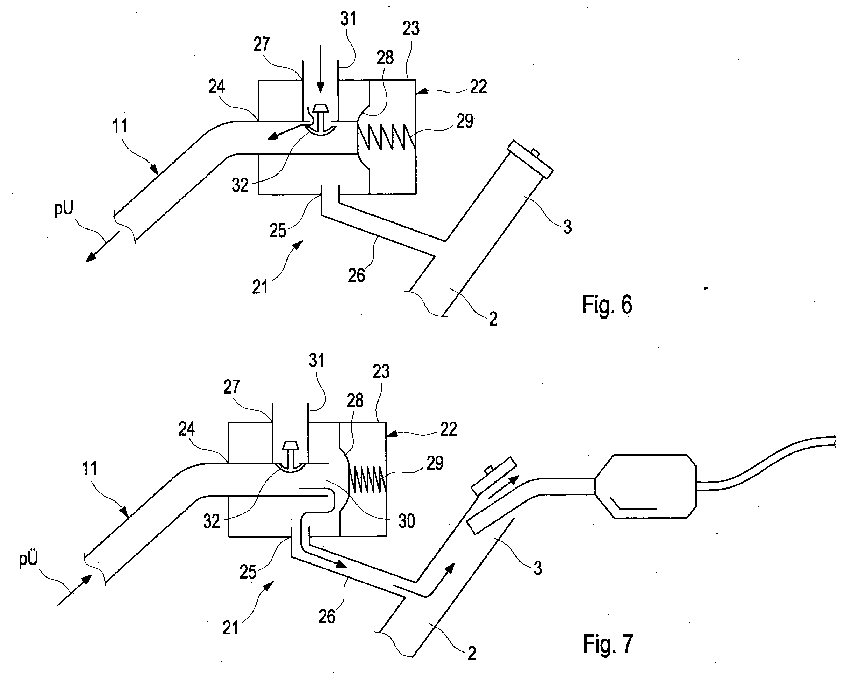

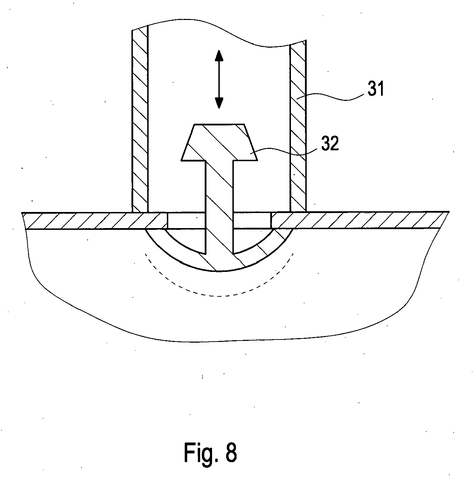

Die Figuren 6 bis 8 zeigen Teile einer Kraftstoffanlage, bei der zwischen dem Einfüllrohr 2 oder dem Einfüllstutzen 3 und der Be- und Entlüftungsleitung 11 eine Verbindung 21 besteht. Wie in Fig. 6 und 7 dargestellt, umfasst diese Verbindung 21 ein Ventil 22, mit dem im Falle eines Unterdrucks in der Flüssigkeitsfalle 7 ein Zurücksaugen von Kraftstoff aus dem Einfüllrohr 3 in die Flüssigkeitsfalle 7 vermieden werden kann.

Das Ventil 22 besitzt ein Ventilgehäuse 23 mit einem ersten Anschluss 24, der durch die Leitung 11 mit der Flüssigkeitsfalle 7 kommuniziert, einen zweiten Anschluss 25, der durch eine Verbindungsleitung 26 mit dem Einfüllstutzen 3 oder Einfüllrohr 2 kommuniziert, und einen dritten Anschluss 27, der direkt mit der Umgebung kommuniziert. Das Ventil 22 enthält weiter eine verformbare Membran 28, die in einer ersten Stellung (Fig. 6) von einer Feder 29 gegen eine stirnseitige Öffnung 30 der in das Gehäuse 23 ragenden Leitung 11 angepresst wird und diese verschließt, und die in einer zweiten Stellung (Fig. 7) von der Öffnung 30 abgehoben ist. Vom dritten Anschluss 27 aus erstreckt sich ein Rohr 31 durch das Ventilgehäuse 23 hindurch bis zu der Leitung 11 und mündet seitlich in diese ein. An der Einmündung ist ein leichtes Verschlusselement 32 vorgesehen, das auf und ab beweglich ist und sich infolge seines Eigengewichts in eine in Fig. 6 dargestellte untere Endstellung bewegt, wenn die Membran 28 in ihrer Schließstellung die Öffnung 30 verschließt und damit die Verbindung zwischen der Leitung 11 und dem Einfüllstutzen 3 unterbricht. In dieser Stellung kann bei einer Entleerung der Flüssigkeitsfalle 7 durch einen Unterdruck im Gas- oder Kopfraum 5 Luft aus der Umgebung durch das Rohr 31 in die Entlüftungsleitung 11 und die Flüssigkeitsfalle 7 nachströmen, so dass aus dem Einfüllstutzen 3 bzw. Einfüllrohr 2 kein Kraftstoff angesaugt werden kann.

Wenn der Kraftstofftank 1 bei geöffnetem Einfüllstutzen 3 betankt wird, wie in Fig. 7 dargestellt, drückt hingegen das aus dem Kopf- oder Gasraum 5 verdrängte und durch die Flüssigkeitsfalle 7 in die Leitung 11 strömende Gas oder Gasgemisch die Membran 28 entgegen der Kraft der Feder 29 in ihre Offenstellung, in der das Gas oder Gasgemisch durch die Verbindungsleitung 26 in den Einfüllstutzen 3 strömen kann. Dabei wird das Verschlusselement 32 angehoben und verschließt das Rohr 31, so dass dort kein Gas oder Gasgemisch in die Umgebung austreten kann.

### BEZUGSZEICHENLISTE

- 1: Kraftstofftank
- 2: Einfüllrohr
- 3: Einfüllstutzen
- 4: Klappe
- 5: Gas- oder Kopfraum
- 6: Tankentlüftungs- und Füllstandsbegrenzungsventil
- 7: Flüssigkeitsfalle
- 8: Labyrinth
- 9: Kraftstoffsammelraum
- 10: Saugleitung
- 11: externe Be- und Entlüftungsleitung
- 12: Tankabsperr- oder Tankisolierventil
- 13: Aktivkohlefilter
- 14: Verteiler
- 15: Zweigleitungen
- 16: Boden
- 17: Endabschnitte
- 18: obere Begrenzungswand
- 19: Bohrung
- 20: Expansionsvolumen
- 21: Verbindung
- 22: Ventil
- 23: Ventilgehäuse
- 24: erster Anschluss
- 25: zweiter Anschluss
- 26: Verbindungsleitung
- 27: dritter Anschluss
- 28: Membran
- 29: Feder
- 30: Öffnung
- 31: Rohr
- 32: Verschlusselement

## Patentansprüche

1. Verfahren zur Absaugung von flüssigem Kraftstoff aus einer Flüssigkeitsfalle (7) in einem Kraftstofftank (1) eines Kraftfahrzeugs, in der bei einer Entlüftung des Kraftstofftanks (1) flüssiger Kraftstoff abgeschieden und in einem Sammelraum (9) gesammelt wird, wobei ein in einem Gas- oder Kopfraum des Kraftstofftanks (1) erzeugter Unterdruck durch eine Saugleitung (10) an der Flüssigkeitsfalle (7) angelegt und der im Sammelraum (9) befindliche flüssige Kraftstoff mindestens teilweise durch die Saugleitung (10) in den Gas- oder Kopfraum (5) abgesaugt wird, **dadurch gekennzeichnet, dass** sich die Saugleitung (10) vor dem Eintritt in den Sammelraum (9) in mehrere parallele Zweigleitungen (15) mit kleinerem Leitungsquerschnitt verzweigt, die von unten her in den Sammelraum (9) eintreten, wobei sich Endabschnitte der Zweigleitungen (15) innerhalb der Flüssigkeitsfalle (7) nach oben durch den Sammelraum (9) erstrecken und innerhalb des Sammelraums (9) seitliche Öffnungen (19) aufweisen, durch die flüssiger Kraftstoff in die Zweigleitungen (15) eintreten kann.

2. Verfahren nach Anspruch 1, **dadurch gekennzeichnet, dass** der Unterdruck im Gas- oder Kopfraum (5) bei gasdicht geschlossenem Kraftstofftank (1) durch Abkühlung des Kraftstofftanks (1) erzeugt wird.

3. Verfahren nach Anspruch 1 oder 2, **dadurch gekennzeichnet, dass** der Unterdruck im Gas- oder Kopfraum (5) bei gasdicht geschlossenem Kraftstofftank (1) durch Verbrauch von Kraftstoff in einem Verbrennungsmotor des Kraftfahrzeugs erzeugt wird.

4. Verfahren nach Anspruch 1, **dadurch gekennzeichnet, dass** der Unterdruck im Gas- oder Kopfraum (5) durch Absaugung von Gas oder Gasgemisch aus dem Gas- oder Kopfraum (5) erzeugt wird.

5. Verfahren nach Anspruch 4, **dadurch gekennzeichnet, dass** das Gas oder Gasgemisch in einen Ansaugtrakt eines Verbrennungsmotors des Kraftfahrzeugs abgesaugt wird.

6. Verfahren nach einem der vorangehenden Ansprüche, **dadurch gekennzeichnet, dass** das Absaugen des flüssigen Kraftstoffs aus der Flüssigkeitsfalle (7) durch Öffnen eines geschlossenen Tankabsperr- oder Tankisolierventils (12) unterstützt wird.

7. Kraftstoffanlage für ein Kraftfahrzeug, mit einem Kraftstofftank (1), einer innerhalb des Kraftstofftanks (1) angeordneten Flüssigkeitsfalle (7) zur Abscheidung von flüssigem Kraftstoff bei einer Entlüftung des Kraftstofftanks (1), wobei die Flüssigkeitsfalle (7) einen Sammelraum (9) für den abgeschiedenen Kraftstoff umfasst und wobei ein Gas- oder Kopfraum (5) des Kraftstofftanks (1) durch eine mit dem Sammelraum (9) kommunizierende Saugleitung (10) mit der Flüssigkeitsfalle (7) verbunden ist, sodass ein in dem Gas- oder Kopfraum (5) des Kraftstofftanks (1) erzeugter Unterdruck durch die Saugleitung (10) an der Flüssigkeitsfalle (7) anliegt und der im Sammelraum (9) befindliche flüssige Kraftstoff mindestens teilweise durch die Saugleitung (10) in den Gas- oder Kopfraum (5) abgesaugt wird, **dadurch gekennzeichnet, dass** sich die Saugleitung (10) vor dem Eintritt in den Sammelraum (9) in mehrere parallele Zweigleitungen (15) mit kleinerem Leitungsquerschnitt verzweigt, die von unten her in den Sammelraum (9) eintreten, wobei sich Endabschnitte der Zweigleitungen (15) innerhalb der Flüssigkeitsfalle (7) nach oben durch den Sammelraum (9) erstrecken und innerhalb des Sammelraums (9) seitliche Öffnungen (19) aufweisen, durch die flüssiger Kraftstoff in die Zweigleitungen (15) eintreten kann.

8. Kraftstoffanlage nach Anspruch 7, **dadurch gekennzeichnet, dass** das im Gas- oder Kopfraum (5) befindliche Ende der Leitung (10) mit einem Tankentlüftungs- und Füllstandsbegrenzungsventil (6) versehen ist.

9. Kraftstoffanlage nach einem der Ansprüche 7 und 8, **dadurch gekennzeichnet, dass** sich ein Ende der Leitung (10) oder der Zweigleitungen (15) innerhalb der Flüssigkeitsfalle (7) nach oben durch den Sammelraum (9) erstreckt, oberhalb des Sammelraums (9) in Innere der Flüssigkeitsfalle (7) mündet und innerhalb des Sammelraums (9) eine seitliche Öffnung (19) aufweist.

10. Kraftstoffanlage nach einem der Ansprüche 7 bis 9, **dadurch gekennzeichnet, dass** die Flüssigkeitsfalle (7) durch eine Entlüftungsleitung (11) mit einem Aktivkohlefilter (13) verbunden ist und dass die Entlüftungsleitung (11) ein Expansionsvolumen (20) und/oder ein Tankabsperr- oder Tankisolierventil (12) enthält.

11. Kraftstoffanlage nach einem der Ansprüche 7 bis 10, **gekennzeichnet durch** ein selbsttätig arbeitendes Ventil (22) zwischen der Flüssigkeitsfalle (7) und einem Einfüllstutzen (3) oder Einfüllrohr (2) des Kraftstofftanks (1), das einen mit der Flüssigkeitsfalle (7) kommunizierende ersten Anschluss (24), einen mit dem Einfüllstutzen (3) oder Einfüllrohr (2) kommunizierenden zweiten Anschluss (25), und einen mit der Umgebung kommunizierenden dritten Anschluss (27) umfasst.

12. Kraftstoffanlage nach einem der Ansprüche 7 bis 11, **gekennzeichnet durch** eine mit einem Absperrventil versehene Absaugleitung zwischen dem Gas- oder Kopfraum (5) des Kraftstofftanks (1) und einem Ansaugtrakt eines Verbrennungsmotors des Kraftfahrzeugs.

## Claims

1. Method for suctioning liquid fuel from a liquid trap (7) in a fuel tank (1) of a motor vehicle in which liquid fuel is cut off and stored in a collection area (9) when the fuel tank (1)is vented wherein a negative pressure generated in a gas or a headspace of the fuel tank (1) is applied by a suction line (10) to the liquid trap (7) and the liquid fuel located in the collection area (9) is suctioned at least partially by the suction line (10) into the gas compartment or headspace (5), **characterised in that** the suction line (10) branches into a plurality of parallel branch lines (15) with a smaller line cross-section prior to entering into the collection area (9) which enter into the collection area (9) from below wherein end sections of the branch lines (15) extend inside the liquid trap (7) upwards through the collection area (9) and comprise lateral openings (19) inside the collection area (9) through which liquid fuel can enter the branch lines (15).

2. Method according to claim 1, **characterised in that** the negative pressure in the gas compartment or headspace (5) is generated by cooling the fuel tank (1) in the case of a fuel tank (1) that is closed in a gas-tight manner.

3. Method according to claim 1 or 2, **characterised in that** the negative pressure in the gas compartment or headspace (5) is generated by the consumption of fuel in a combustion engine of the motor vehicle in the case of a fuel tank (1) that is closed in a gas-tight manner.

4. Method according to claim 1, **characterised in that** the negative pressure in the gas compartment or headspace (5) is generated by suctioning gas or a gas mixture from the gas compartment or headspace (5).

5. Method according to claim 4, **characterised in that** the gas or gas mixture is suctioned into an intake of a combustion engine of the motor vehicle.

6. Method according to any one of the preceding claims, **characterised in that** the suctioning of the liquid fuel from the liquid trap (7) is supported by opening a closed tank shut-off or tank isolating valve (12).

7. Fuel system for a motor vehicle having a fuel tank (1), a liquid trap (7) arranged inside the fuel tank (1) for cutting off liquid fuel when the fuel tank (1) is vented, wherein the liquid trap (7) comprises a collection area (9) for the cut-off fuel and wherein a gas compartment or headspace (5) of the fuel tank (1) is connected by a suction line (10), communicating with the collection area (9), to the liquid trap (7) such that a negative pressure generated in the gas compartment or headspace (5) of the fuel tank (1) is applied by the suction line (10) to the liquid trap (7) and the liquid fuel located in the collection area (9) is suctioned at least partially through the suction line (10) into the gas compartment or headspace (5), **characterised in that** the suction line (10) is branched into a plurality of parallel branch lines (15) with a smaller cross-section prior to entering the collection area (9) which enter the collection area (9) from below wherein end sections of the branch lines (15) extend inside the liquid trap (7) upwards through the collection area (9) and comprise lateral openings (19) inside the collection area (9) through which liquid fuel can enter the branch lines (15).

8. Fuel system according to claim 7, **characterised in that** the end of the line (10) located in the gas compartment or headspace (5) is provided with a tank venting and fill level limiting valve (6).

9. Fuel system according to any one of claims 7 and 8, **characterised in that** an end of the line (10) or the branch lines (15) extends inside the liquid trap (7) upwards through the collection area (9), discharges above the collection area (9) into the interior of the liquid trap (7) and comprises a lateral opening (19) inside the collection area (9).

10. Fuel system according to any one of claims 7 to 9, **characterised in that** the liquid trap (7) is connected to an active carbon filter (13) by a venting line (11) and **in that** the venting line (11) contains an expansion volume (20) and/or a tank shut-off valve or tank isolating valve (12).

11. Fuel system according to any one of claims 7 to 10, **characterised by** a automatically-functioning valve (22) between the liquid trap (7) and a filling plug (3) or filling tube (2) of the fuel tank (1) which comprises a first connection (24) communicating with the liquid trap (7), a second connection (25) communicating with the filling plug (3) or filling tube (2) and a third connection (27) communicating with the environment.

12. Fuel system according to any one of claims 7 to 11, **characterised by** a suction line provided with a shut-off valve between the gas compartment or headspace (5) of the fuel tank (1) and an intake of a combustion engine of the motor vehicle.

## Revendications

1. Procédé d'aspiration de carburant liquide à partir d'un piège à liquides (7) dans un réservoir de carburant (1) d'un véhicule automobile, dans lequel lors d'une purge d'air du réservoir de carburant (1) du carburant liquide est séparé et collecté dans un collecteur (9), dans lequel une dépression générée dans un espace de gaz ou de tête du réservoir de carburant (1) est appliquée sur le piège à liquides (7) par une conduite d'aspiration (10) et le carburant liquide se trouvant dans le collecteur (9) est aspiré au moins en partie par la conduite d'aspiration (10) dans l'espace de gaz ou de tête (5), **caractérisé en ce que** la conduite d'aspiration (10) se divise avant l'entrée dans le collecteur (9) en plusieurs conduites de dérivation (15) parallèles avec section transversale de conduite plus petite, qui entrent dans le collecteur (9) par le bas, dans lequel des sections terminales des conduites de dérivation (15) s'étendent à l'intérieur du piège à liquides (7) vers le haut à travers le collecteur (9) et présentent des ouvertures latérales (19) à l'intérieur du collecteur (9), par lesquelles du carburant liquide peut entrer dans les conduites de dérivation (15).

2. Procédé selon la revendication 1, **caractérisé en ce que** la dépression dans l'espace de gaz ou de tête (5) est générée lorsque le réservoir de carburant (1) est fermé de manière étanche aux gaz par refroidissement du réservoir de carburant (1).

3. Procédé selon la revendication 1 ou 2, **caractérisé en ce que** la dépression dans l'espace de gaz ou de tête (5) est générée lorsque le réservoir de carburant (1) est fermé de manière étanche aux gaz par consommation de carburant dans un moteur à combustion interne du véhicule automobile.

4. Procédé selon la revendication 1, **caractérisé en ce que** la dépression dans l'espace de gaz ou de tête (5) est générée par aspiration de gaz ou mélange de gaz à partir de l'espace de gaz ou de tête (5).

5. Procédé selon la revendication 4, **caractérisé en ce que** le gaz ou mélange de gaz est aspiré dans un conduit d'aspiration d'un moteur à combustion interne du véhicule automobile.

6. Procédé selon l'une quelconque des revendications précédentes, **caractérisé en ce que** l'aspiration du carburant liquide à partir du piège à liquides (7) est soutenue par l'ouverture d'une soupape d'arrêt du réservoir ou soupape d'isolation du réservoir (12) fermée.

7. Installation de carburant pour un véhicule automobile, avec un réservoir de carburant (1), un piège à liquides (7) agencé à l'intérieur du réservoir de carburant (1) pour la séparation de carburant liquide lors d'une purge d'air du réservoir de carburant (1), dans laquelle le piège à liquides (7) comprend un collecteur (9) pour le carburant séparé et dans laquelle un espace de gaz ou de tête (5) du réservoir de carburant (1) est relié au piège à liquides (7) par une conduite d'aspiration (10) communiquant avec le collecteur (9), si bien qu'une dépression générée dans l'espace de gaz ou de tête (5) du réservoir de carburant (1) s'applique sur le piège à liquides (7) par la conduite d'aspiration (10) et le carburant liquide se trouvant dans le collecteur (9) est aspiré au moins en partie par la conduite d'aspiration (10) dans l'espace de gaz ou de tête (5), **caractérisée en ce que** la conduite d'aspiration (10) se divise avant l'entrée dans le collecteur (9) en plusieurs conduites de dérivation (15) parallèles avec section transversale de conduite plus petite, qui entrent dans le collecteur (9) par le bas, dans laquelle des sections terminales des conduites de dérivation (15) s'étendent à l'intérieur du piège à liquides (7) vers le haut à travers le collecteur (9) et présentent des ouvertures latérales (19) à l'intérieur du collecteur (9), par lesquelles du carburant liquide peut entrer dans les conduites de dérivation (15).

8. Installation de carburant selon la revendication 7, **caractérisée en ce que** l'extrémité de la conduite (10) se trouvant dans l'espace de gaz ou de tête (5) est dotée d'une soupape de purge d'air du réservoir et de limitation de niveau de remplissage (6).

9. Installation de carburant selon l'une quelconque des revendications 7 et 8, **caractérisée en ce qu'**une extrémité de la conduite (10) ou des conduites de dérivation (15) s'étend à l'intérieur du piège à liquides (7) vers le haut à travers le collecteur (9), débouche au-dessus du collecteur (9) à l'intérieur du piège à liquides (7) et présente une ouverture latérale (19) à l'intérieur du collecteur (9).

10. Installation de carburant selon l'une quelconque des revendications 7 à 9, **caractérisée en ce que** le piège à liquides (7) est relié à un filtre à charbon actif (13) par une conduite de purge d'air (11) et **en ce que** la conduite de purge d'air (11) contient un volume d'expansion (20) et/ou une soupape d'arrêt du réservoir ou soupape d'isolation du réservoir (12).

11. Installation de carburant selon l'une quelconque des revendications 7 à 10, **caractérisée par** une soupape à fonctionnement automatique (22) entre le piège à liquides (7) et une tubulure de remplissage (3) ou un tube de remplissage (2) du réservoir de carburant (1), qui comprend un premier raccord (24) communiquant avec le piège à liquides (7), un deuxième raccord (25) communiquant avec la tubulure de remplissage (3) ou le tube de remplissage (2) et un troisième raccord (27) communiquant avec l'environnement.

12. Installation de carburant selon l'une quelconque des revendications 7 à 11, **caractérisée par** une conduite d'aspiration dotée d'une soupape d'arrêt entre l'espace de gaz ou de tête (5) du réservoir de carburant (1) et un conduit d'aspiration d'un moteur à combustion interne du véhicule automobile.
